# EUROPÄISCHE PATENTSCHRIFT

(11) **EP 3 789 842 B1**
(45) Veröffentlichungstag und Bekanntmachung des Hinweises auf die Patenterteilung: **25.05.2022**
(21) Anmeldenummer: 20189577.8
(22) Anmeldetag: 05.08.2020
(51) Int. Cl.: G05D 1/02, G01B 11/25, G01B 11/30, G01C 21/00, G01S 15/08, G01S 17/46, G01S 17/08

(54) **VERFAHREN ZUR LOKALISIERUNG EINES FAHRZEUGS SOWIE FAHRZEUG ZUR DURCHFÜHRUNG DES VERFAHRENS**
METHOD FOR LOCATING A VEHICLE AND VEHICLE FOR PERFORMING THE METHOD
PROCÉDÉ DE LOCALISATION D'UN VÉHICULE AINSI QUE VÉHICULE DESTINÉ À LA MISE EN UVRE DU PROCÉDÉ

(30) Priorität: 04.09.2019 DE 102019123647
(43) Veröffentlichungstag der Anmeldung: 10.03.2021
(73) Patentinhaber: STILL GmbH, 22113 Hamburg (DE)
(72) Erfinder: KÖNIG, Ralf, 21365 Adendorf (DE); IGNATOV, Marina, 24116 Kiel (DE)
(74) Vertreter: Patentship Patentanwaltgesellschaft

(56) Entgegenhaltungen:
- EP-A1- 2 192 384
- US-A1- 2004 221 790
- US-A1- 2016 378 117

## Beschreibung

Die Erfindung betrifft ein Verfahren zur Lokalisierung eines auf einem Fahrboden beweglichen Fahrzeugs, insbesondere eines Flurförderzeugs, wobei mittels einer am Fahrzeug angeordneten Projektionseinheit ein Projektionsmuster auf den Fahrboden projiziert wird, das Projektionsmuster mittels eines am Fahrzeug angeordneten optischen Sensors erfasst wird, und die Sensordaten in einer Datenverarbeitungseinheit ausgewertet werden.

Die Erfindung betrifft weiterhin ein Fahrzeug zur Durchführung des Verfahrens, wobei am Fahrzeug eine zur Projektion eines Projektionsmusters auf den Fahrboden ausgebildete Projektionseinheit und ein zur Erfassung des Projektionsmusters ausgebildeter optischer Sensor angeordnet sind, und auf dem Fahrzeug eine zur Auswertung der Sensordaten ausgebildete Datenverarbeitungseinheit vorgesehen ist.

Aus der EP 2 192 384 A1 ist ein gattungsgemäßes Verfahren und ein gattungsgemäßes Fahrzeug bekannt. Hierzu von einer Lichtquelle der Boden beleuchtet und von einer Detektiereinheit, die als Kamera ausgebildet ist, das Reflexionsbild des befahrenen Bodens erfasst und in dem Reflexionsbild des Bodens Texturelemente des befahrenen Bodens (z.B. Körnung des Estrichs, Schottersteine, Verschmutzungen des Bodens) mittels geeigneter Erkennungssoftware automatisiert erkannt. Anhand der Verfolgung dieser automatisiert erkannten Texturelemente des Bodens in aufeinanderfolgenden Reflexionsbildern sowie von der Detektiereinheit erfasster als künstlicher optischer Markierungen auf dem Boden ausgebildeter externer Signalgeber erfolgt die Positionsermittlung des Fahrzeugs.

Aus der US 2016/378117 A1 ist ein mobiler Roboter bekannt, beispielsweise ein Saugroboter, der einen Projektor und einen optischen Sensor aufweist. Der Projektor sendet ein Projektionsmuster aus, das reflektiert und von dem optischen Sensor erfasst wird. Aus Veränderungen des reflektierten Projektionsmusters werden Objekte (Hindernisse, Menschen, Wände) im Fahrweg des Roboters erkannt.

Die US 2004/221790 A1 offenbart einen mobilen Roboter, bei dem die Navigation/Lokalisierung mittels einer Kamera erfolgt, die Bodenmerkmale erkennt, wobei aus der Positionsänderung der Bodenmerkmale die Fahrzeugbewegung bestimmt wird. Zusätzlich kann eine Lichtquelle vorgesehen sein, die den Aufnahmebereich (field-of-view) der Kamera ausleuchtet.

Beim Betrieb von Flurförderzeugen in einem intralogistischen System kommen häufig Assistenzsysteme zum Einsatz, die eine Bedienung des Flurförderzeugs erleichtern sollen oder sogar einen automatisierten oder teilautomatisierten Betrieb ermöglichen sollen. Da Flurförderzeuge meistens in definierten Betriebsbereichen, z.B. in Warenlagern, eingesetzt werden, können hierfür ortsbezogene Assistenzsysteme genutzt werden. Dabei werden im Warenlager beispielsweise Zeichen, Linien und Schilder oder auch Barcodes und Funkstationen zur Übermittlung von Identifikationssignalen (Funkbeacons) angebracht. Diese Informationen sind aber nur abrufbar, wenn sie in ein Managementsystem für den Betrieb des Flurförderzeugs eingetragen werden. Das Flurförderzeug kann über einen Sensor, z.B. einen optischen Sensor, diese Informationen erfassen und mittels einer Datenverarbeitungseinrichtung mit den Eintragungen im Managementsystem vergleichen. Auf diese Weise ist eine erleichterte manuelle oder automatische Navigation des Flurförderzeugs im Warenlager möglich.

Beispielsweise ist in der EP 2 711 880 A1 ein fahrerloses Transportsystem beschrieben, bei dem Markierungen, z.B. Reflexionselemente, eingesetzt werden, die mittels optischer Sensoren, insbesondere Lasersensoren, gut abgetastet werden können. Diese Markierungen werden genutzt, um eine Navigation im Warenlager zu ermöglichen. Hierzu werden die Koordinaten des Warenlagers als Referenzdaten in der Datenverarbeitungseinrichtung hinterlegt. Die Transportfahrzeuge erkennen die Markierungen und führen einen Abgleich der aktuellen Koordinaten (Ist-Position) des Transportfahrzeuges mit den in der Datenverarbeitungseinrichtung hinterlegten Referenzdaten des Warenlagers durch. So können die Transportfahrzeuge automatisch zu einer Zielposition (Soll-Position) für die Kommissionierung der nächsten Ware verfahren werden. Als Markierungen können auch Barcodes oder Quick-Response-Codes (QR-Codes) eingesetzt werden, die von einer optosensorischen Erfassungseinheit, beispielsweise einer Kamera, erfasst werden können.

Kameras werden heute in Flurförderzeugen vornehmlich dazu genutzt, Bilder von schwer einsehbaren Bereichen des Fahrzeugs anzuzeigen. So sind Kameras für die Rückraumüberwachung oder Kameras in der Nähe eines Lastaufnahmemittels, beispielsweise einer Lastgabel, verbreitet, die den Fahrer dabei unterstützen sollen, in hohen Arbeitshöhen zu arbeiten. Seit einiger Zeit werden fahrzeuggebundene Kameras auch dazu verwendet, mittels Bildverarbeitung umgebende Personen zu erkennen oder Barcodes an Waren automatisiert zu scannen.

Im Allgemeinen lokalisieren sich autonome Fahrzeuge nach heutigem Stand der Technik im produktiven Einsatz über Verfahren, die z. B. Induktionsschleifen, eine Magnetlokalisierung, eine Laserlokalisierung mit Reflektoren, die künstliche Landmarken bilden, oder eine GPS-Lokalisierung verwenden.

Die genannten Technologien weisen folgende technischen Nachteile auf:
Sie sind meist mit hohen Kosten für die Sensorik verbunden. Die Baugröße der Sensoren bereitet häufig Probleme bezüglich Bauraumrestriktionen und der Sichtbarkeit bzw. der erforderlichen Höhe der Montage. Insbesondere beim Dauereinsatz weisen sie eine begrenzte sensorische Stabilität und Robustheit auf. Außerdem bieten sie meist nur eine begrenzte Genauigkeit.

Zusätzlich haben die genannten Technologien die nachgenannten prozessseitigen Nachteile:
Sie benötigen Modifikationen an der Infrastruktur. So müssen beispielsweise künstliche Landmarken und/oder eine kabelgebundene Energie-/Datenanbindung bereitgestellt werden. Außerdem sind sie mit einem hohen Kartographier- und Pflegeaufwand verbunden. Darüber hinaus bieten sie nur eine begrenzte Erweiterbarkeit. Ein hoher Rechenaufwand ergibt sich oftmals aufgrund einer erforderlichen Fusionierung von Daten oder Filterung von Messsignalen.

Der vorliegenden Erfindung liegt die Aufgabe zugrunde, ein Verfahren zur Lokalisierung eines auf einem Fahrboden beweglichen Fahrzeugs gemäß Patentanspruch 1 sowie ein Fahrzeug zur Durchführung des Verfahrens gemäß Patentanspruch 20 zur Verfügung zu stellen, die mit geringem Aufwand an Infrastruktur eine zuverlässige Lokalisierung ermöglichen.

Diese Aufgabe wird verfahrensseitig erfindungsgemäß dadurch gelöst, dass aus Veränderungen des Projektionsmusters aufgrund von Bodenunebenheiten des Fahrbodens ein Rauheitsbild des Fahrbodens erstellt wird, das eine Lokalisierung des Fahrzeugs auf dem Fahrboden ermöglicht.

Bestehende Lokalisierungstechnologien, die bodengebundene Informationen nutzen, setzen auf künstliche Landmarken (in der Regel als Marker zur absoluten Lokalisierung) oder einen optischen Fluss zur relativen Lokalisierung. In beiden Fällen nutzen die Verfahren ein 2D-Kamerabild (also eine farbbehaftete 2D-Projektion der Szenerie) als Eingangsdaten.

Die hier dargestellte Erfindung wertet nicht die optische 2D-Projektion aus, sondern ersetzt das Eingangssignal gegen ein Rauheitsbild des Bodens. Hierzu greift die Erfindung Ansätze der bekannten Methode der Laser-Linien-Triangulation auf. Im Allgemeinen versteht man unter einer Triangulation eine geometrische Methode der optischen Abstandsmessung durch genaue Winkelmessung innerhalb von Dreiecken. Die Berechnung erfolgt mittels trigonometrischer Funktionen. Vereinfacht könnte man auch sagen, dass von zwei Punkten, deren Abstand bekannt ist, Winkelmessungen zu beliebig anderen Punkten im Raum erfolgen, um deren Lage eindeutig zu bezeichnen. Aktive Verfahren nutzen eine Lichtquelle, zumeist einen Laser, der unter einem Winkel das Objekt beleuchtet, dessen Oberfläche vermessen werden soll. Ein elektronischer Bildwandler, zumeist eine Kamera oder ein optischer Positionssensor, registriert das Streulicht. Bei Kenntnis der Strahlrichtung und des Abstandes zwischen Kamera und Lichtquelle kann damit der Abstand vom Objekt zur Kamera bestimmt werden. Die Verbindung Kamera-Lichtquelle sowie die beiden Strahlen von und zum Objekt bilden hierbei ein Dreieck, daher die Bezeichnung Triangulation.

Die Erfindung erweitert dieses Verfahren bezüglich der Laser-Lichtprojektion und passt es dem Einsatz in mobilen Fahrzeugen geeignet an.

So wird in einer bevorzugten Ausgestaltung der Erfindung als Projektionseinheit ein Laserlichtprojektor verwendet.

Als optischer Sensor wird mit Vorteil eine Kamera verwendet.

Im Gegensatz zu herkömmlichen Methoden der Triangulation ist gemäß einer besonders bevorzugten Ausgestaltung vorgesehen, dass mittels der Projektionseinheit ein Projektionsstrahl in einem spitzen Winkel gegen den Fahrboden gerichtet wird und mittels des von der Projektionseinheit beabstandeten optischen Sensors das Projektionsmuster orthogonal zum Fahrboden erfasst wird. Trifft der Projektionsstrahl auf eine Bodenunebenheit, beispielsweise eine Kuhle im Boden in Form eines Kugelsegments, so ergibt sich ein Kontaktpunkt des Projektionsstrahls mit dem Boden in einer Verlängerung in Projektionsstrahlrichtung. Die Verschiebung des Kontaktpunkts bei einer Bodenunebenheit gegenüber der Situation bei einem ebenen Boden zeigt sich in einer Veränderung des Projektionsmusters. Diese Veränderung kann vom optischen Sensor erfasst werden und durch die Datenverarbeitungseinheit ausgewertet werden. Daraus kann ein Rauheitsbild des Fahrbodens erstellt werden, das eine Lokalisierung des Fahrzeugs ermöglicht.

Vorzugsweise wird mittels der Projektionseinheit ein Projektionsstrahl in Fahrtrichtung des Fahrzeugs gegen den Fahrboden gerichtet.

Zweckmäßigerweise umfasst das Projektionsmuster parallele Linien. Dabei sind die parallelen Linien gemäß einer bevorzugten Variante orthogonal zur Fahrtrichtung des Fahrzeugs ausgerichtet. Trifft der Projektionsstrahl auf eine Bodenunebenheit, also ein als Rauheitsmerkmal ausgebildetes Bodenmerkmal, beispielsweise eine Kuhle, so entsteht eine Beule in der projizierten Linie. Die Abweichung von der Ideallinie repräsentiert hierbei über den Strahlensatz die Tiefe der Kuhle.

Bei einer angenommenen Fahrgeschwindigkeit von 2,2 m/s (8 km/h) des Fahrzeugs und einer räumlichen Ausdehnung des Bodenmerkmals von 100 µm sowie einer Forderung von 10 Abtastwerten im Bodenmerkmal ergibt sich eine Abtastrate von 4,5 MHz. Diese Annahme gilt bei Einsatz einer Projektionslinie. Die Abtastrate kann reduziert werden, wenn die Bodenmerkmale über eine größere Anzahl von Projektionslinien erfasst werden. Daher ist es vorteilhaft, eine möglichst große Anzahl paralleler Linien im Projektionsmuster zu verwenden.

Bei orthogonal zur Fahrtrichtung ausgerichteten Projektionslinien wird ein Bodenmerkmal nur für einen kurzen Zeitpunkt im Projektionsmuster dargestellt. Um eine längere Darstellung zu erreichen, ist gemäß einer anderen vorteilhaften Variante vorgesehen, dass die parallelen Linien längs zur Fahrtrichtung des Fahrzeugs ausgerichtet sind.

Hierzu muss allerdings die Anordnung von Projektionseinheit und optischem Sensor angepasst werden. Wären Projektionseinheit und optischer Sensor auf einer gemeinsamen, gedachten Achse parallel zur Fahrtrichtung angeordnet, so würde sich die Strahlverlängerung des Projektionsstrahls beim Auftreffen auf eine Kuhle im Fahrboden mit anderen Lichtpunkten überlagern und wäre somit im Projektionsbild nicht sichtbar. Daher sind für diesen Fall Projektionseinheit und optischer Sensor in Fahrzeuglängsrichtung versetzt angeordnet. Dadurch ergibt sich eine diagonale Projektionsbasis, die den Einsatz von in Fahrtrichtung ausgerichteten Projektionslinien ermöglicht.

Vorteilhaft an dieser Variante ist, dass das Bodenmerkmal in Längsrichtung durch die projizierte Linie wandert und somit eine geringere Abtastrate gewählt werden kann. Die relative Fahrzeugbewegung in Längsrichtung lässt sich aus dem Abstand der Merkmalsprojektion in der projizierten Linie direkt ermitteln.

Weiterhin vorteilhaft ist an dieser Variante, dass als Auswertealgorithmus eine relativ geringkomplexe Kreuzkorrelation zwischen den Projektionssignaturen der Linien berechnet werden kann, die insbesondere bei eindeutigen, nicht-reproduzierenden Merkmalen in Kombination mit geringerer Abtastrate eine eindeutige relative Lokalisierung erlaubt. Dies ist vorteilhaft, da zur Auswertung ein echtzeit-geeignetes Verfahren benötigt wird, das mit begrenzter Rechenleistung umsetzbar ist.

Gemäß einer weiteren vorteilhaften Ausgestaltung umfasst das Projektionsmuster ein Projektionsgitter aus senkrecht zueinander ausgerichteten parallelen Linien. Dabei ist in einer bevorzugten Variante ein Teil der Linien orthogonal zur Fahrtrichtung des Fahrzeugs und ein Teil der Linien längs zur Fahrtrichtung des Fahrzeugs ausgerichtet. In einer anderen vorteilhaften Variante sind die Linien in einem Winkel von 45° zur Fahrtrichtung des Fahrzeugs ausgerichtet.

Mit solchen Projektionsgittern können neben der Fahrzeugbewegung in Fahrzeuglängsrichtung auch Fahrzeugbewegungen in Querrichtung und Fahrzeugbewegungen in kombinierter Längs- und Querrichtung erfasst werden. Dies ist insbesondere bei wendigen Fahrzeugen, insbesondere bei Flurförderzeugen, von Vorteil, die beispielsweise auf der Stelle drehen können, wobei sich das Fahrzeug auf einer Kreisbahn mit kleinem Radius bewegt.

Beim Einsatz von Projektionsgittern wird bevorzugt eine diagonale Projektionsbasis verwendet, bei der die Projektionseinheit und der optische Sensor in Fahrzeuglängsrichtung versetzt angeordnet sind.

Eine andere Variante sieht vor, dass das Projektionsmuster nicht kartesische Elemente, insbesondere konzentrische Kreise, umfasst.

Eine Bodenunebenheit des Fahrbodens wird mit Vorteil in Form einer Verbiegung und/oder Versetzung im Projektionsmuster als Bodenmerkmal vom optischen Sensor erfasst. Bewegt sich das Fahrzeug über den Fahrboden, so verschiebt sich das Bodenmerkmal im Projektionsmuster. Aus dieser Verschiebung des Bodenmerkmals im Projektionsmuster kann die Datenverarbeitungseinheit eine Bewegung des Fahrzeugs relativ zum Fahrboden errechnen.

Bewegt sich das Fahrzeug über größere Bodenunebenheiten, wie beispielsweise beim Überfahren von Schwellen, kann der vertikale Abstand zwischen der Projektionseinheit und dem Fahrboden nicht exakt eingehalten werden. Dies führt zu einer Verfälschung der durch die Datenverarbeitungseinheit errechneten Fahrstrecke.

Daher ist gemäß einer besonders bevorzugten Weiterbildung des Erfindungsgedankens vorgesehen, dass die Datenverarbeitungseinheit mittels einer Referenzstrecke kalibriert wird.

Hierzu wird in einer bevorzugten Variante die Referenzstrecke mittels orthogonaler Projektion von mindestens zwei Referenzstrahlen auf den Fahrboden in Nähe des optischen Sensors realisiert. Die Referenzstrahlen können beispielsweise mittels zweier Laser, insbesondere Punktlaser, erzeugt werden, die in unmittelbarer Nähe zum optischen Sensor angeordnet sind und senkrecht auf den Fahrboden strahlen und auf dem Fahrboden zwei Lichtpunkte erzeugen. Die Verbindung der beiden, in einem bekannten Abstand voneinander entfernten, Lichtpunkte auf dem Fahrboden bildet die Referenzstrecke.

Eine andere Variante sieht vor, dass die Höhe des Fahrzeugs über dem Fahrboden mittels einer Abstandsmesseinheit, insbesondere einer Laser-Entfernungsmesseinheit oder einer Ultraschall-Entfernungsmesseinheit, gemessen und aus der gemessenen Höhe der Abstand der Projektionsgeraden der Projektionseinheit als Referenzstrecke in der Datenverarbeitungseinheit errechnet wird.

In einer weiteren Variante wird die Referenzstrecke aus Antriebsinformationen des Fahrzeugs in der Datenverarbeitungseinheit errechnet. Hierbei werden die aus dem Rauheitsbild des Fahrbodens generierten Bewegungsinformationen in Relation zu den Odometrieinformationen des Fahrantriebs gesetzt. Aus der Abweichung zu der erwarteten Fahrzeugbewegung ergibt sich die Abweichung zu dem angenommenen vertikalen Abstand zwischen Projektionseinheit und Boden.

Gemäß einer bevorzugten Weiterbildung der Erfindung ist vorgesehen, dass auf dem Fahrboden angeordnete künstliche Landmarken vom optischen Sensor erfasst werden. Bei Verwendung von bekannten künstlichen Landmarken, die beispielsweise als Aufkleber auf dem Fahrboden aufgebracht sind, liegt die Information bezüglich des Abstands charakterisierter Strukturen (zum Beispiel Linien oder Kreisdurchmesser) explizit als Wissen vor. Somit kann der vertikale Abstand des optischen Sensors zu der Landmarke hierüber ermittelt werden. Der vertikale Abstand des Fahrzeugs zum Fahrboden ist somit bekannt. Entsprechend kann die Relativbewegung des Fahrzeugs über dem Fahrboden aus dem bekannten vertikalen Abstand und der Bildveränderung des Projektionsmusters wie oben beschrieben bestimmt werden.

Die Erfindung betrifft ferner ein Fahrzeug zur Durchführung des Verfahrens.

Bei dem Fahrzeug wird die gestellte Aufgabe dadurch gelöst, dass die Datenverarbeitungseinheit dazu eingerichtet ist, aus Veränderungen des Projektionsmusters aufgrund von Bodenunebenheiten des Fahrbodens ein Rauheitsbild des Fahrbodens zu erstellen, das eine Lokalisierung des Fahrzeugs auf dem Fahrboden ermöglicht.

Zweckmäßigerweise ist die Projektionseinheit als Laserlichtprojektor ausgebildet.

Der optische Sensor ist vorzugsweise als Kamera ausgebildet.

Gemäß einer besonders bevorzugten Ausgestaltung ist die Projektionsstrahlrichtung der Projektionseinheit in einem spitzen Winkel gegen den Fahrboden ausgerichtet. Außerdem ist die Empfangsrichtung des optischen Sensors orthogonal zum Fahrboden ausgerichtet. Dabei sind die Projektionseinheit und der optische Sensor soweit voneinander beabstandet, dass sich die Projektionsstrahlrichtung und die Empfangsrichtung auf dem Fahrboden treffen.

Um auch bei Projektionslinien in Fahrtrichtung eine Auswertung der Bodenmerkmale zu ermöglichen, ist in einer weiteren vorteilhaften Ausgestaltung der Erfindung vorgesehen, dass die Projektionseinheit und der optische Sensor in Fahrzeuglängsrichtung versetzt angeordnet sind.

Bevorzugt ist das Fahrzeug als Flurförderzeug, insbesondere als Plattformwagen, Schlepper, Routenzug-Fahrzeug, Gabelstapler oder Kommissionierfahrzeug ausgebildet.

Besonders vorteilhaft ist die Ausbildung des Fahrzeugs als autonomes Fahrzeug. Hierzu gehören fahrerlose Transportfahrzeuge (FTF, englisch: Automated Guided Vehicle, AGV). Darunter versteht man flurgebundene Förderfahrzeuge mit eigenem Fahrantrieb, die automatisch gesteuert und berührungslos geführt werden. Es gibt auch fahrerlose Transportfahrzeuge, die Ladungen selbständig aufnehmen können.

In einer bevorzugten Ausgestaltung ist das Fahrzeug als mobiler Kommissionierroboter ausgebildet. Kommissionierroboter können Packstücke selbständig mittels Roboterarmen aufnehmen und auf einer mitgeführten Plattform ablegen.

Die Erfindung bietet eine Reihe von Vorteilen:
Die Erfindung ermöglicht die Verwendung von zusätzlichen natürlichen Landmarken neben der Verwendung eines 2D-Kamerabildes des Bodens. Gleichzeitig nutzt die Erfindung bestehende Sensoren, insbesondere eine 2D-Bodenkamera, wie sie beispielsweise beim Detektieren des optischen Flusses Verwendung finden und stellt somit eine kostengünstige weitere Lokalisierungsmöglichkeit dar. Durch den Einsatz einer projizierten Gitterstruktur kann die Rauheit der Bodenoberfläche anhand einer kontinuierlichen Bewegung entlang der Linien in Längsrichtung sehr genau beobachtet und damit lokalisiert werden. Hierbei beschränkt sich das durch die Projektionseinheit, beispielsweise einen Laserprojektor, projizierte Muster jedoch nicht auf eine Gitterstruktur und kann abhängig vom Anwendungsgebiet und von der Bodenbeschaffenheit variiert und angepasst werden. Der zu verwendende Laserprojektor als Projektionseinheit arbeitet in der Regel mit lithografisch hergestellten Blenden, die kombiniert mit kostengünstigen Laserdioden zu geringen Anschaffungskosten der Projektionseinheit führen. In diesem Zusammenhang kann ein Laserprojektor kompakt (kleinbauend) und ohne bewegliche Mechanik realisiert werden, wodurch Verschleißteile minimiert werden.

Weitere Vorteile und Einzelheiten der Erfindung werden anhand der in den schematischen Figuren dargestellten Ausführungsbeispiele näher erläutert. Hierbei zeigen
- Figur 1: ein erfindungsgemäßes Fahrzeug mit Projektionseinheit und optischem Sensor,
- Figur 2: ein Projektionsmuster mit parallelen Linien,
- Figur 3: den Einfluss einer Bodenunebenheit auf das Projektionsmuster,
- Figur 4: ein Rauheitsbild des Fahrbodens bei diagonaler Projektionsbasis,
- Figur 5: die Bewegung eines Bodenmerkmals durch das Rauheitsbild,
- Figur 6: ein Projektionsmuster mit einem Projektionsgitter,
- Figur 7: ein Projektionsmuster mit konzentrischen Kreisen,
- Figur 8: ein Fahrzeug mit Punktlasern zur Kalibrierung,
- Figur 9: ein Projektionsbild mit Laserpunkten zur Kennzeichnung der Referenzstrecke,
- Figur 10: ein Fahrzeug mit Laser-Entfernungseinheit zur Kalibrierung,
- Figur 11: ein Projektionsbild mit Projektionslinien und eine geometrische Darstellung zur Bestimmung des Linienabstands, und
- Figur 12: Beispiele mit künstlichen Landmarken zur Kalibrierung.

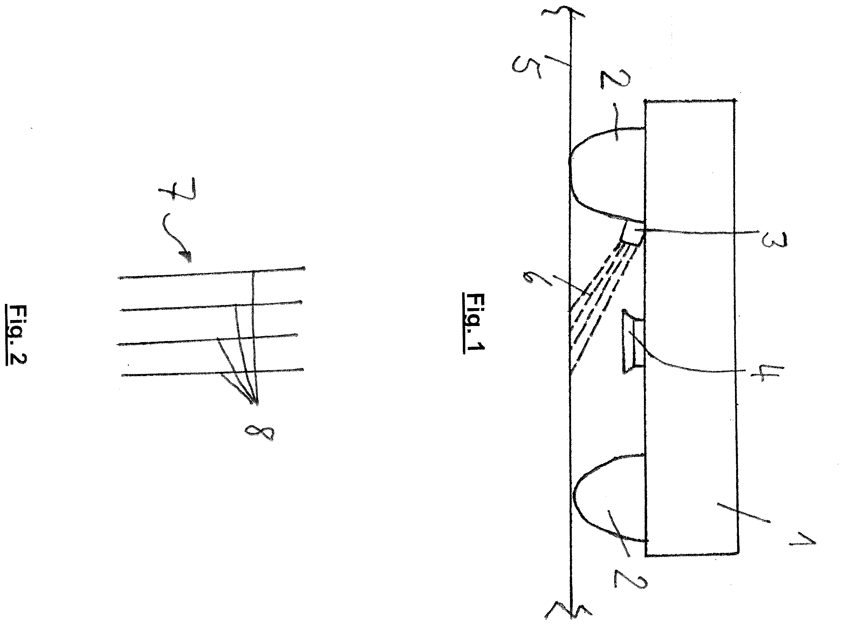

In der Figur 1 ist ein Fahrzeug 1, beispielsweise ein autonomes Flurförderzeug, mit Rädern 2, einer Projektionseinheit 3 und einem optischen Sensor 4 dargestellt. Das Fahrzeug 1 bewegt sich auf einem Fahrboden 5. Bei der Projektionseinheit 3 handelt es ich um einen Laserlichtprojektor. Als optischer Sensor 4 dient eine Kamera. Modifizierend zu üblichen Triangulationsverfahren setzt das erfindungsgemäße Verfahren eine breite Triangulationsbasis an, bei der die als Laserlichtprojektor, vorzugsweise als Linien- oder Gitterprojektor, ausgebildete Projektionseinheit 3 weiter entfernt vom optischen Sensor 4 montiert ist und der Projektionsstrahl 6 der Projektionseinheit 3 in einem spitzen Winkel gegen den Fahrboden 5 gerichtet ist. Abweichend von den bekannten Verfahren der Laser-Licht-Triangulation ist der optische Sensor 4 hier im Orthogonal zum Objekt, also zum Fahrboden 5, gerichtet, der Projektionsstrahl 6 hingegen in der Nicht-Orthogonalen angeordnet.

Die Projektionseinheit 3 kann als Halbleiterlaser mit vorgeschalteter Optik ohne mechanisch bewegliche Bauteile ausgebildet sein. Die Projektionseinheit 3 erzeugt auf einer ideal ebenen Fläche des Fahrbodens 5 das in der Figur 2 dargestellte Projektionsmuster 7 aus parallel verlaufenden Linien 8. Die Linien 8 sind beispielsweise orthogonal und somit quer zur Fahrtrichtung des Fahrzeugs 1 angeordnet.

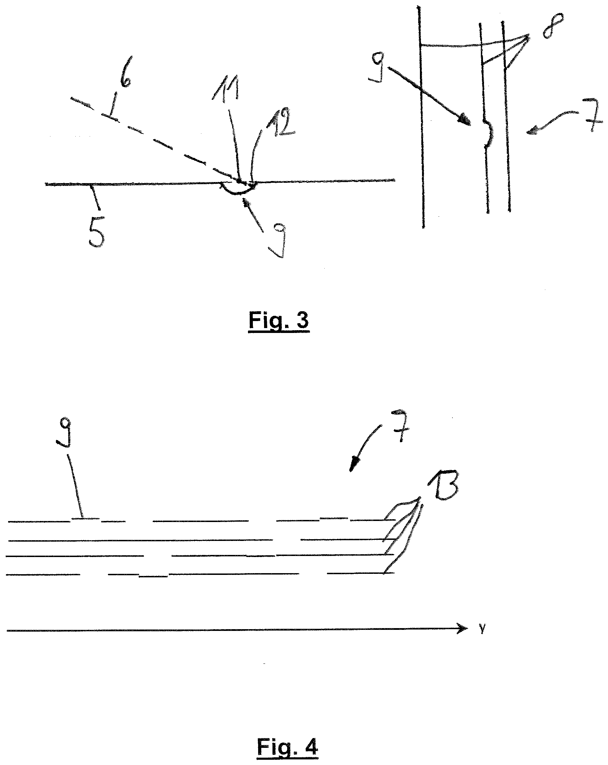

Wird abweichend von der Figur 2 ein nicht-ebener Boden betrachtet, so wirkt sich eine Bodenunebenheit wie in der Figur 3 dargestellt aus. In der Figur 3 ist in der linken Darstellung eine Seitenansicht und in der rechten Darstellung eine Draufsicht auf den Fahrboden 5 mit dem sich ergebenden Projektionsmuster und somit dem Rauheitsbild des Fahrbodens dargestellt. Trifft der Projektionsstrahls 6 auf ein als Bodenunebenheit ausgebildetes Bodenmerkmal 9, beispielsweise eine kleine Kuhle im Fahrboden 5 in Form eines Kugelsegments, so ergibt sich ein in Längsrichtung über den erwarteten Kontaktpunkt 11 hinaus verschobener Kontaktpunkt 12 des Projektionsstrahls 6 mit dem Fahrboden 5. Dies hat zur Folge, dass sich das Bodenmerkmal 9 in Form einer Beule in der entsprechenden Linie 8 des Projektionsmusters 7 zeigt. Die Abweichung von der Ideallinie repräsentiert hierbei über den Strahlensatz die Tiefe der Kuhle.

Bei der in der Figur 3 dargestellten Variante der Erfindung wird ein Projektionsmuster 7 mit parallelen Linien 8 verwendet, die orthogonal und somit zur Fahrtrichtung des Fahrzeugs 1 ausgerichtet sind. Nachteilig an der Ausrichtung der Linien 8 orthogonal zur Fahrtrichtung des Fahrzeugs 1 ist, dass sich ein Bodenmerkmal 9 nur für einen kurzen Zeitpunkt in dem Projektionsmuster 7 darstellt. Ideal wäre eine in Fahrtrichtung des Fahrzeugs 1 angenommene Projektionslinie, was allerdings verfahrensseitig nicht ohne konstruktive Anpassungen erreichbar ist, da sich eine Strahlverlängerung dann mit anderen Lichtpunkten überlagert und im Projektionsmuster nicht sichtbar ist.

Werden allerdings abweichend von der Figur 3 die Projektionseinheit 3 und der optische Sensor 4 in Fahrzeug-Längsrichtung versetzt montiert, d.h. die Projektionseinheit 3 und der optische Sensor 4 in Fahrzeugquerrichtung beabstandet voneinander am Fahrzeug 1 angeordnet, ergibt sich hieraus eine diagonale Projektionsbasis, die den Einsatz von in Fahrtrichtung des Fahrzeugs 1 ausgerichteten Projektionslinien 13 ermöglicht. Ein Projektionsmuster 7 mit in Fahrtrichtung des Fahrzeugs 1 ausgerichteten Linien 13 ist in Figur 4 gezeigt, die ein entsprechendes Rauheitsbild des Fahrbodens 5 zeigt.

Vorteilhaft an dieser Anordnung der Figur 4 ist, dass das Bodenmerkmal 9, das sich als Versetzung und/oder Verschiebung in der Projektionslinie 13 zeigt, in Längsrichtung durch die Linie 13 wandert, und somit eine geringere Abtastrate gewählt werden kann. Die relative Fahrzeugbewegung in Längsrichtung lässt sich aus dem Abstand der Bodenmerkmals-Projektionen in der Linie 13 und somit aus dem Rauheitsbild des Fahrbodens 5 zu verschiedenen Zeitpunkten direkt ermitteln. Eine Datenverarbeitungseinheit kann somit aus der von dem optischen Sensor 4 erfassten Verschiebung des Bodenmerkmals 9 im Projektionsmuster 7 eine Bewegung des Fahrzeugs 1 relativ zum Fahrboden 5 errechnen.

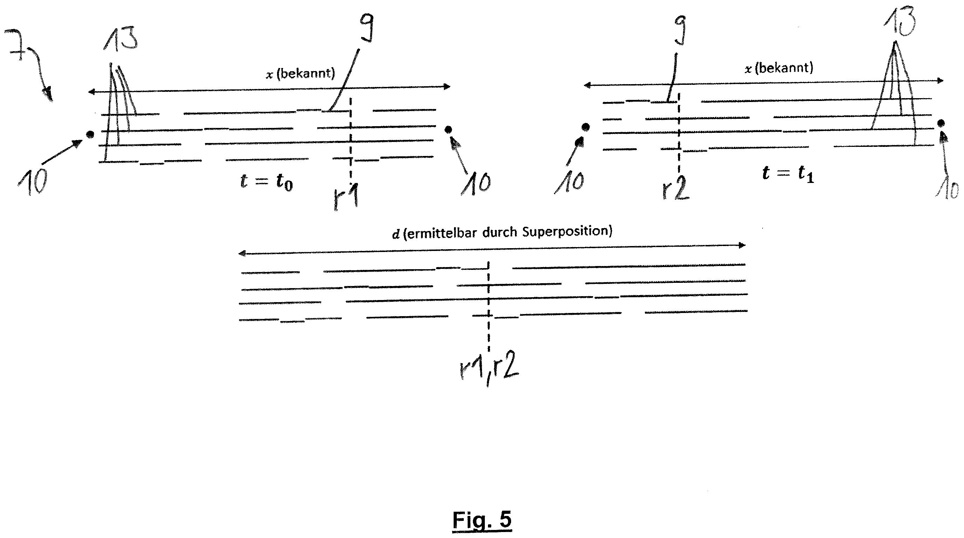

In der Figur 5 ist die Bewegung eines Bodenmerkmals 9 durch das Rauheitsbild veranschaulicht. In der linken oberen Abbildung der Figur 5 ist das Projektionsmuster 7 zu einem Zeitpunkt t = t₀ gezeigt, zu dem das Bodenmerkmal 9 sich an der Stelle r1 befindet. Der Abstand x zwischen den die Enden des Projektionsmusters 7 bildenden Projektionspunkten 10 ist konstruktionsbedingt bekannt. Aufgrund der Bewegung des Fahrzeugs 1 in Längsrichtung wandert das Bodenmerkmal 9 durch die Linie 13 des Projektionsmusters 7. Zu einem Zeitpunkt t = t₁ , der in der rechten Abbildung der Figur 5 dargestellt ist, befindet sich das Bodenmerkmal 9 an der Stelle r2. Durch Überlagerung der beiden Rauheitsbilder (linke obere und rechte obere Abbildung der Figur 5) entsteht die in der unteren Abbildung der Figur 5 dargestellte vollständige Karte mit Längenangaben d.

Die in Zusammenhang mit den Figuren 2 bis 5 beschriebenen Verfahren fokussieren die Fahrzeugbewegung in Fahrzeug-Längsrichtung und vernachlässigen dabei die Tatsache, dass bei wendigen Fahrzeugen - wie im Flurförderzeugbereich üblich - signifikante Fahrzeugbewegungen in Querrichtung oder kombinierter Längs- und Querrichtung auftreten. Dies ist beispielsweise beim Drehen auf der Stelle der Fall, wobei sich das Fahrzeug auf einer Kreisbahn mit kleinem Radius bewegt.

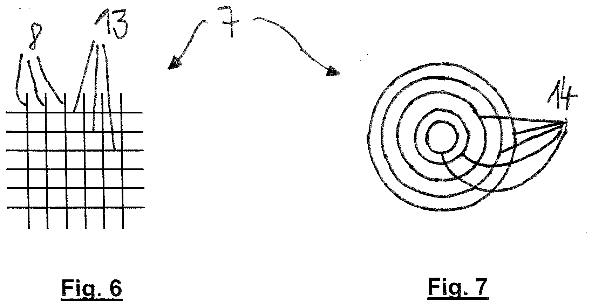

Das in der Figur 6 dargestellte Projektionsmuster 7 in Form eines Projektionsgitters stellt eine Kombination aus Quer- und Längslinien 8, 13 dar, wobei eine diagonale Projektionsbasis eingesetzt wird. Auf diese Weise können auch Fahrzeugbewegungen in Querrichtung oder kombinierter Längs- und Querrichtung erfasst werden.

In Erweiterung hierzu ist auch der Einsatz eines um 45° gedrehten, rautenförmigen Projektionsgitters denkbar.

Weiterhin ist denkbar, nicht-kartesische Elemente wie zum Beispiel Kreise als Projektionsmuster einzusetzen. Ein Projektionsmuster 7 mit konzentrischen Kreisen 14 ist in der Figur 7 dargestellt.

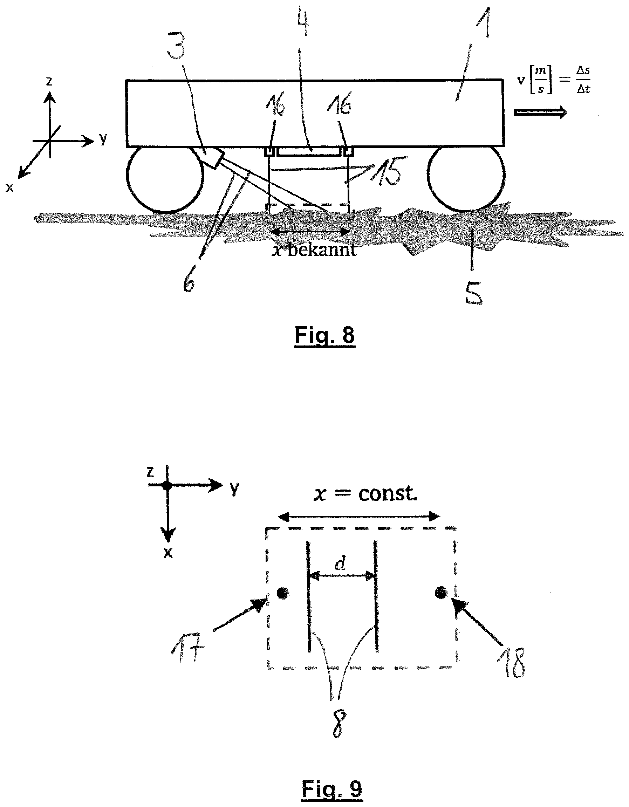

Die in Zusammenhang mit den Figuren 2 bis 7 dargestellten Überlegungen fußen auf der Annahme eines exakt bekannten vertikalen Abstands zwischen der Projektionseinheit 3 und dem Fahrboden 5. Da diese Annahme in der Praxis zum Beispiel wegen größeren Bodenunebenheiten, beispielsweise Schwellen, nicht sicher gegeben ist, ist gemäß den Figuren 8 bis 11 vorgesehen, dass die Datenverarbeitungseinheit, die aus dem Rauheitsbild des Fahrbodens die Bewegung des Fahrzeugs bestimmt, mittels einer Referenzstrecke kalibriert wird.

Hierzu wird in der in der Figur 8 gezeigten Variante die Referenzstrecke mittels orthogonaler Projektion von mindestens zwei Referenzstrahlen 15 auf den Fahrboden 5 in Nähe des optischen Sensors 4 realisiert. Die Referenzstrahlen 15 können beispielsweise mittels zweier Laser 16, insbesondere Punktlaser, erzeugt werden, die in unmittelbarer Nähe zum optischen Sensor 4 angeordnet sind und senkrecht auf den Fahrboden 5 strahlen und auf dem Fahrboden 5 entsprechende Lichtpunkt bzw. Projektionspunkte erzeugen. Die Verbindung der beiden, in einem bekannten Abstand x voneinander entfernten, Lichtpunkte auf dem Fahrboden 5 bildet die Referenzstrecke.

In der Figur 9 ist das mit der Anordnung der Figur 8 erzielte Projektionsbild dargestellt. Bei Verwendung einer Kamera als optischer Sensor 4 handelt es sich dabei um das Kamerabild. Mittels der beiden Laser 16 werden im Kamerabild zwei Laserpunkte 17, 18 mit konstruktiv vorgegebenem und somit bekanntem Abstand x projiziert. Dieser Abstand x kann als Messnormal verwendet werden. Die unbekannte Wegstrecke d, die das Fahrzeug 1 zurückgelegt hat, bzw. der Abstand zwischen zwei Projektionslinien 8 kann anteilig anhand des Abstands x zwischen den Laserpunkten 17, 18 ermittelt werden.

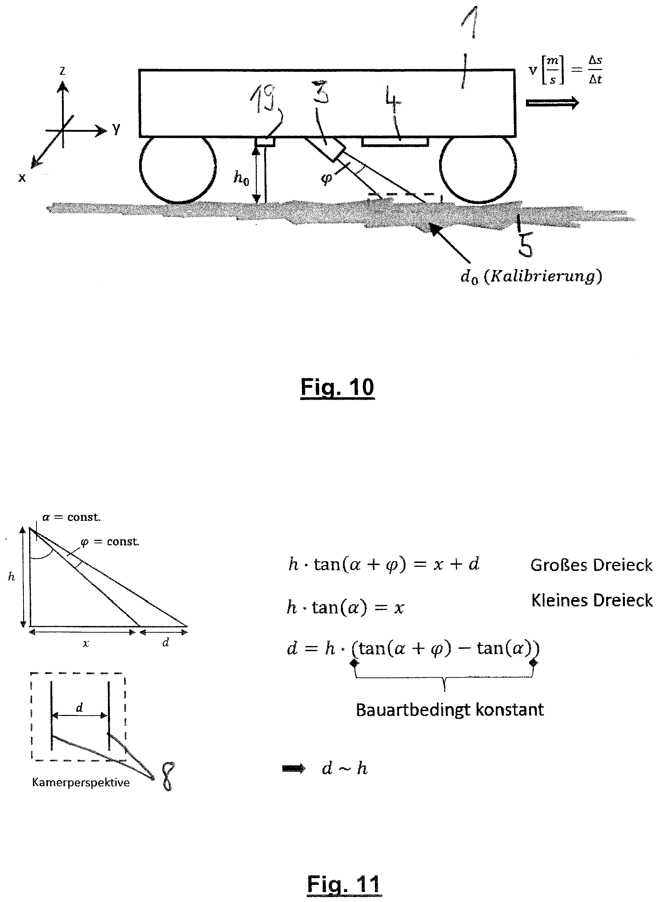

Alternativ lässt sich durch Einsatz einer expliziten Einheit zur Abstandsmessung, beispielsweise laser- oder ultraschallbasiert, der Abstand der Projektionsgeraden, wie in den Figuren 10 und 11 gezeigt, ermitteln.

Wie in der Figur 10 dargestellt, verfügt das Fahrzeug 1 hierzu über eine, beispielsweise als Zweipunktlaser ausgebildete, Abstandsmesseinheit 19, die den vertikalen Abstand h zwischen dem Fahrzeug 1 und dem Fahrboden 5 erfasst und misst. Bei einem bekannten Abstand h₀ ergibt sich mit dem bekannten Projektionswinkel ϕ der Projektionseinheit 3 eine kalibrierte Wegstrecke d₀ bzw. ein kalibrierter Abstand zwischen zwei Projektionslinien 8.

Das hierbei erzeugte Projektionsbild des optischen Sensors 4 ist in der unteren Abbildung der Figur 11 gezeigt. Wie in der oberen Darstellung der Figur 11 veranschaulicht ist, lässt sich bei einer bekannten, mittels der Abstandsmesseinheit 19 ermittelten Höhe h des Fahrzeugs 1 über dem Fahrboden 5 die unbekannte Wegstrecke d bzw. der sich mit der Höhe h verändernde Abstand zwischen zwei Projektionslinien 8 auf geometrische Weise ermitteln, wie in den Formeln auf der rechten Seite der Figur 11 verdeutlicht ist.

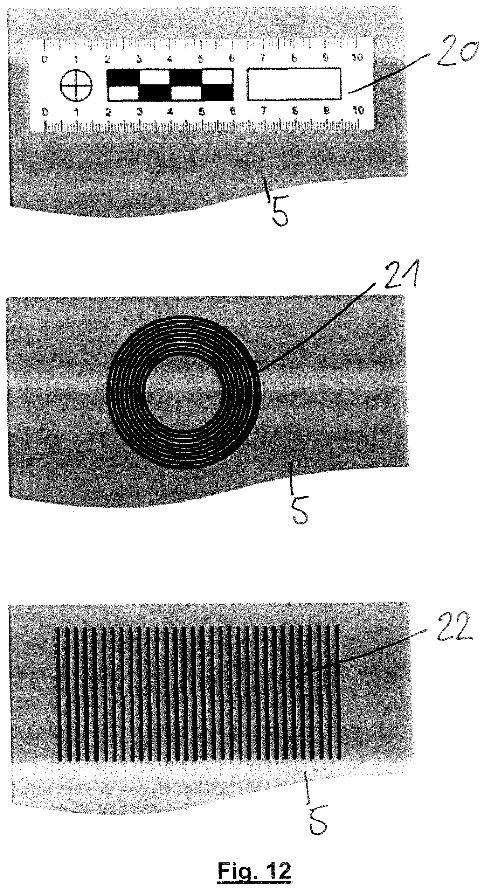

Die Figur 12 zeigt Beispiele für künstliche Landmarken 20, 21, 22 zur Kalibrierung, die alternativ oder ergänzend zu den Ausführungsbeispielen der Figuren 8 bis 11 eingesetzt werden können. Bei Verwendung von bekannten künstlichen Landmarken 20, 21, 22, die beispielsweise als Aufkleber auf dem Fahrboden 5 aufgebracht sind, liegt die Information bezüglich des Abstands charakterisierter Strukturen (zum Beispiel Linien oder Kreisdurchmesser) explizit als Wissen für eine Referenzstrecke vor. Somit kann der vertikale Abstand des optischen Sensors 4 zu der Landmarke hierüber ermittelt werden, der vertikale Abstand des Fahrzeugs 1 zum Fahrboden 5 ist somit bekannt. Entsprechend kann die Relativbewegung des Fahrzeugs 1 über dem Fahrboden 5 aus dem bekannten vertikalen Abstand und der Bildveränderung der Projektionslinien und somit aus dem sich verändernden Rauheitsbild des Fahrbodens 5 wie oben beschrieben bestimmt werden.

## Patentansprüche

1. Verfahren zur Lokalisierung eines auf einem Fahrboden (5) beweglichen Fahrzeugs (1), insbesondere Flurförderzeug, wobei mittels einer am Fahrzeug (1) angeordneten Projektionseinheit (3) ein Projektionsmuster (7) auf den Fahrboden (5) projiziert wird, das Projektionsmuster (7) mittels eines am Fahrzeug (1) angeordneten optischen Sensors (4) erfasst wird, und die Sensordaten in einer Datenverarbeitungseinheit ausgewertet werden, **dadurch gekennzeichnet, dass** aus Veränderungen des Projektionsmusters (7) aufgrund von Bodenunebenheiten des Fahrbodens (5) ein Rauheitsbild des Fahrbodens (5) erstellt wird, das eine Lokalisierung des Fahrzeugs (1) auf dem Fahrboden (5) ermöglicht.

2. Verfahren nach Anspruch 1, **dadurch gekennzeichnet, dass** als Projektionseinheit (3) ein Laserlichtprojektor verwendet wird.

3. Verfahren nach Anspruch 1 oder 2, **dadurch gekennzeichnet, dass** als optischer Sensor (4) eine Kamera verwendet wird.

4. Verfahren nach einem der Ansprüche 1 bis 3, **dadurch gekennzeichnet, dass** mittels der Projektionseinheit (3) ein Projektionsstrahl (6) in einem spitzen Winkel gegen den Fahrboden (5) gerichtet wird und mittels des von der Projektionseinheit (3) beabstandeten optischen Sensors (4) das Projektionsmuster (7) orthogonal zum Fahrboden (5) erfasst wird.

5. Verfahren nach einem der Ansprüche 1 bis 4, **dadurch gekennzeichnet, dass** mittels der Projektionseinheit (3) ein Projektionsstrahl (6) in Fahrtrichtung des Fahrzeugs (1) gegen den Fahrboden (5) gerichtet wird.

6. Verfahren nach einem der Ansprüche 1 bis 5, **dadurch gekennzeichnet, dass** das Projektionsmuster (7) parallele Linien (8, 13) umfasst.

7. Verfahren nach Anspruch 6, **dadurch gekennzeichnet, dass** die parallelen Linien (8) orthogonal zur Fahrtrichtung des Fahrzeugs (1) ausgerichtet sind.

8. Verfahren nach Anspruch 6, **dadurch gekennzeichnet, dass** die parallelen Linien (13) längs zur Fahrtrichtung des Fahrzeugs (1) ausgerichtet sind.

9. Verfahren nach Anspruch 6, **dadurch gekennzeichnet, dass** das Projektionsmuster (7) ein Projektionsgitter aus senkrecht zueinander ausgerichteten parallelen Linien (8, 13) umfasst.

10. Verfahren nach Anspruch 9, **dadurch gekennzeichnet, dass** ein Teil der Linien (8) orthogonal zur Fahrtrichtung des Fahrzeugs (1) und ein Teil der Linien (13) längs zur Fahrtrichtung des Fahrzeugs (1) ausgerichtet ist.

11. Verfahren nach Anspruch 9, **dadurch gekennzeichnet, dass** die Linien (8, 13) in einem Winkel von 45° zur Fahrtrichtung des Fahrzeugs (1) ausgerichtet sind.

12. Verfahren nach einem der Ansprüche 1 bis 5, **dadurch gekennzeichnet, dass** das Projektionsmuster (7) konzentrische Kreise (14) umfasst.

13. Verfahren nach einem der Ansprüche 1 bis 12, **dadurch gekennzeichnet, dass** eine Bodenunebenheit des Fahrbodens (5) in Form einer Verbiegung und/oder Versetzung im Projektionsmuster (7) als Bodenmerkmal (9) vom optischen Sensor (4) erfasst wird.

14. Verfahren nach Anspruch 13, **dadurch gekennzeichnet, dass** die Datenverarbeitungseinheit aus einer vom optischen Sensor (4) erfassten Verschiebung des Bodenmerkmals (9) im Projektionsmuster eine Bewegung des Fahrzeugs (1) relativ zum Fahrboden (5) errechnet.

15. Verfahren nach einem der Ansprüche 1 bis 15, **dadurch gekennzeichnet, dass** die Datenverarbeitungseinheit mittels einer Referenzstrecke kalibriert wird.

16. Verfahren nach Anspruch 15, **dadurch gekennzeichnet, dass** die Referenzstrecke mittels orthogonaler Projektion von mindestens zwei Referenzstrahlen (15) auf den Fahrboden (5) in Nähe des optischen Sensors (4) erzeugt wird.

17. Verfahren nach Anspruch 15, **dadurch gekennzeichnet, dass** die Höhe des Fahrzeugs (1) über dem Fahrboden (5) mittels einer Abstandsmesseinheit (19), insbesondere einer Laser-Entfernungsmesseinheit oder einer Ultraschall-Entfernungsmesseinheit, gemessen und aus der gemessenen Höhe der Abstand der Projektionsgeraden der Projektionseinheit (3) als Referenzstrecke in der Datenverarbeitungseinheit errechnet wird.

18. Verfahren nach Anspruch 15, **dadurch gekennzeichnet, dass** die Referenzstrecke aus Antriebsinformationen des Fahrzeugs (1) in der Datenverarbeitungseinheit errechnet wird.

19. Verfahren nach einem der Ansprüche 1 bis 18, **dadurch gekennzeichnet, dass** auf dem Fahrboden (5) angeordnete künstliche Landmarken (20, 21, 22) vom optischen Sensor (4) erfasst werden.

20. Fahrzeug (1) zur Durchführung des Verfahrens nach einem der Ansprüche 1 bis 19, wobei am Fahrzeug (1) eine zur Projektion eines Projektionsmusters (7) auf den Fahrboden (5) ausgebildete Projektionseinheit (3) und ein zur Erfassung des Projektionsmusters (7) ausgebildeter optischer Sensor (4) angeordnet sind, und auf dem Fahrzeug (1) eine zur Auswertung der Sensordaten ausgebildete Datenverarbeitungseinheit vorgesehen ist, **dadurch gekennzeichnet, dass** die Datenverarbeitungseinheit dazu eingerichtet ist, aus Veränderungen des Projektionsmusters (7) aufgrund von Bodenunebenheiten des Fahrbodens (5) ein Rauheitsbild des Fahrbodens (5) zu erstellen, das eine Lokalisierung des Fahrzeugs (1) auf dem Fahrboden (5) ermöglicht.

21. Fahrzeug (1) nach Anspruch 20, **dadurch gekennzeichnet, dass** die Projektionseinheit (3) als Laserlichtprojektor ausgebildet ist.

22. Fahrzeug (1) nach Anspruch 20 oder 21, **dadurch gekennzeichnet, dass** der optische Sensor (4) als Kamera ausgebildet ist.

23. Fahrzeug (1) nach einem der Ansprüche 20 bis 22, **dadurch gekennzeichnet, dass** die Projektionsstrahlrichtung der Projektionseinheit (3) in einem spitzen Winkel gegen den Fahrboden (5) ausgerichtet ist und die Empfangsrichtung des optischen Sensors (3) orthogonal zum Fahrboden (5) ausgerichtet ist, wobei die Projektionseinheit (3) und der optische Sensor (4) soweit voneinander beabstandet sind, dass sich die Projektionsstrahlrichtung und die Empfangsrichtung auf dem Fahrboden (5) treffen.

24. Fahrzeug (1) nach einem der Ansprüche 20 bis 23, **dadurch gekennzeichnet, dass** die Projektionseinheit (3) und der optische Sensor (4) in Fahrzeuglängsrichtung versetzt angeordnet sind.

25. Fahrzeug (1) nach einem der Ansprüche 20 bis 24, **dadurch gekennzeichnet, dass** das Fahrzeug (1) als Flurförderzeug, insbesondere als Plattformwagen, Schlepper, Routenzug-Fahrzeug, Gabelstapler oder Kommissionierfahrzeug ausgebildet ist.

26. Fahrzeug (1) nach einem der Ansprüche 20 bis 25, **dadurch gekennzeichnet, dass** das Fahrzeug (1) als autonomes Fahrzeug ausgebildet ist.

27. Fahrzeug (1) nach Anspruch 26, **dadurch gekennzeichnet, dass** das Fahrzeug (1) als mobiler Kommissionierroboter ausgebildet ist.

## Claims

1. Method for localizing a vehicle (1) movable on a driving surface (5), in particular an industrial truck, wherein a projection pattern (7) is projected onto the driving surface (5) by means of a projection unit (3) arranged on the vehicle (1), the projection pattern (7) is captured by means of an optical sensor (4) arranged on the vehicle (1), and the sensor data are evaluated in a data processing unit, **characterized in that** a roughness image of the driving surface (5) that makes localization of the vehicle (1) on the driving surface (5) possible is created from changes in the projection pattern (7) due to surface unevennesses of the driving surface (5).

2. Method according to Claim 1, **characterized in that** a laser light projector is used as the projection unit (3) .

3. Method according to Claim 1 or 2, **characterized in that** a camera is used as the optical sensor (4).

4. Method according to one of Claims 1 to 3, **characterized in that** a projection beam (6) is directed towards the driving surface (5) at an acute angle by means of the projection unit (3) and the projection pattern (7) is captured orthogonally to the driving surface (5) by means of the optical sensor (4) that is disposed at a distance from the projection unit (3).

5. Method according to one of Claims 1 to 4, **characterized in that** a projection beam (6) is directed towards the driving surface (5) in the driving direction of the vehicle (1) by means of the projection unit (3).

6. Method according to one of Claims 1 to 5, **characterized in that** the projection pattern (7) comprises parallel lines (8, 13).

7. Method according to Claim 6, **characterized in that** the parallel lines (8) are aligned orthogonally to the driving direction of the vehicle (1).

8. Method according to Claim 6, **characterized in that** the parallel lines (13) are aligned longitudinally with respect to the driving direction of the vehicle (1).

9. Method according to Claim 6, **characterized in that** the projection pattern (7) comprises a projection grid composed of parallel lines (8, 13) that are aligned perpendicularly with respect to one another.

10. Method according to Claim 9, **characterized in that** one part of the lines (8) is aligned orthogonally to the driving direction of the vehicle (1) and one part of the lines (13) is aligned longitudinally with respect to the driving direction of the vehicle (1).

11. Method according to Claim 9, **characterized in that** the lines (8, 13) are aligned at an angle of 45° to the driving direction of the vehicle (1).

12. Method according to one of Claims 1 to 5, **characterized in that** the projection pattern (7) comprises concentric circles (14).

13. Method according to one of Claims 1 to 12, **characterized in that** a surface unevenness of the driving surface (5) is captured by the optical sensor (4) as a surface feature (9) in the form of a curvature and/or shift in the projection pattern (7).

14. Method according to Claim 13, **characterized in that** the data processing unit computes a movement of the vehicle (1) relative to the driving surface (5) from a displacement of the surface feature (9) in the projection pattern captured by the optical sensor (4).

15. Method according to one of Claims 1 to 15, **characterized in that** the data processing unit is calibrated by means of a reference route.

16. Method according to Claim 15, **characterized in that** the reference route is generated by means of orthogonal projection of at least two reference beams (15) onto the driving surface (5) in the vicinity of the optical sensor (4) .

17. Method according to Claim 15, **characterized in that** the height of the vehicle (1) above the driving surface (5) is measured by means of a distance measuring unit (19), in particular a laser distance measuring unit or an ultrasonic distance measuring unit, and the distance of the straight projection lines of the projection unit (3) is computed as the reference route in the data processing unit from the measured height.

18. Method according to Claim 15, **characterized in that** the reference route is computed in the data processing unit from drive information of the vehicle (1).

19. Method according to one of Claims 1 to 18, **characterized in that** artificial landmarks (20, 21, 22) arranged on the driving surface (5) are captured by the optical sensor (4).

20. Vehicle (1) for carrying out the method according to one of Claims 1 to 19, wherein a projection unit (3) configured for projecting a projection pattern (7) onto the driving surface (5) and an optical sensor (4) configured for capturing the projection pattern (7) are arranged on the vehicle (1), and a data processing unit configured for evaluating the sensor data is provided on the vehicle (1), **characterized in that** the data processing unit is set up to create a roughness image of the driving surface (5) that makes localization of the vehicle (1) on the driving surface (5) possible from changes in the projection pattern (7) due to surface unevennesses of the driving surface (5).

21. Vehicle (1) according to Claim 20, **characterized in that** the projection unit (3) is configured as a laser light projector.

22. Vehicle (1) according to Claim 20 or 21, **characterized in that** the optical sensor (4) is configured as a camera.

23. Vehicle (1) according to one of Claims 20 to 22, **characterized in that** the projection beam direction of the projection unit (3) is directed towards the driving surface (5) at an acute angle and the reception direction of the optical sensor (3) is aligned orthogonally to the driving surface (5), wherein the projection unit (3) and the optical sensor (4) are disposed at a distance from one another such that the projection beam direction and the reception direction intersect on the driving surface (5) .

24. Vehicle (1) according to one of Claims 20 to 23, **characterized in that** the projection unit (3) and the optical sensor (4) are arranged with an offset in the longitudinal direction of the vehicle.

25. Vehicle (1) according to one of Claims 20 to 24, **characterized in that** the vehicle (1) is configured as an industrial truck, in particular as a platform truck, tractor, tugger-train vehicle, forklift truck or picking cart.

26. Vehicle (1) according to one of Claims 20 to 25, **characterized in that** the vehicle (1) is configured as an autonomous vehicle.

27. Vehicle (1) according to Claim 26, **characterized in that** the vehicle (1) is configured as a mobile picking robot.

## Revendications

1. Procédé pour localiser un véhicule (1) mobile sur un plancher de déplacement (5), notamment un chariot de manutention, un modèle de projection (7) étant projeté sur le plancher de déplacement (5) au moyen d'une unité de projection (3) disposée sur le véhicule (1), le modèle de projection (7) étant détecté au moyen d'un capteur optique (4) disposé sur le véhicule (1) et les données de capteur étant interprétées dans une unité de traitement de données, **caractérisé en ce qu'**une image de rugosité du plancher de déplacement (5) est créée à partir des modifications du modèle de projection (7) en raison des irrégularités du sol du plancher de déplacement (5), lequel rend possible une localisation du véhicule (1) sur le plancher de déplacement (5).

2. Procédé selon la revendication 1, **caractérisé en ce que** l'unité de projection (3) utilisée est un projecteur à lumière laser.

3. Procédé selon la revendication 1 ou 2, **caractérisé en ce que** le capteur optique (4) utilisé est une caméra.

4. Procédé selon l'une des revendications 1 à 3, **caractérisé en ce qu'**un rayon de projection (6) est dirigé selon un angle aigu vers le plancher de déplacement (5) au moyen de l'unité de projection (3) et le modèle de projection (7) est détecté orthogonalement au plancher de déplacement (5) au moyen du capteur optique (4) espacé de l'unité de projection (3).

5. Procédé selon l'une des revendications 1 à 4, **caractérisé en ce qu'**un rayon de projection (6) est dirigé au moyen de l'unité de projection (3) vers le plancher de déplacement (5) dans le sens de déplacement du véhicule (1).

6. Procédé selon l'une des revendications 1 à 5, **caractérisé en ce que** le modèle de projection (7) comprend des lignes parallèles (8, 13).

7. Procédé selon la revendication 6, **caractérisé en ce que** les lignes parallèles (8) sont orientées orthogonalement au sens de déplacement du véhicule (1).

8. Procédé selon la revendication 6, **caractérisé en ce que** les lignes parallèles (13) sont orientées le long du sens de déplacement du véhicule (1).

9. Procédé selon la revendication 6, **caractérisé en ce que** le modèle de projection (7) comprend une grille de projection composée de lignes parallèles (8, 13) orientées perpendiculairement les unes aux autres.

10. Procédé selon la revendication 9, **caractérisé en ce qu'**une partie des lignes (8) sont orientées orthogonalement au sens de déplacement du véhicule (1) et une partie des lignes (13) sont orientées le long du sens de déplacement du véhicule (1).

11. Procédé selon la revendication 9, **caractérisé en ce que** les lignes (8, 13) sont orientées à un angle de 45° par rapport au sens de déplacement du véhicule (1).

12. Procédé selon l'une des revendications 1 à 5, **caractérisé en ce que** le modèle de projection (7) comprend des cercles concentriques (14).

13. Procédé selon l'une des revendications 1 à 12, **caractérisé en ce qu'**une irrégularité du sol du plancher de déplacement (5) sous la forme d'un pli et/ou d'un décalage dans le modèle de projection (7) est détectée par le capteur optique (4) en tant que caractéristique du sol (9).

14. Procédé selon la revendication 13, **caractérisé en ce que** l'unité de traitement de données calcule un mouvement du véhicule (1) par rapport au plancher de déplacement (5) à partir d'un déport de la caractéristique du sol (9) détecté par le capteur optique (4) dans le modèle de projection.

15. Procédé selon l'une des revendications 1 à 15, **caractérisé en ce que** l'unité de traitement de données est étalonnée au moyen d'un trajet de référence.

16. Procédé selon la revendication 15, **caractérisé en ce que** le trajet de référence est généré au moyen d'une projection orthogonale d'au moins deux rayons de référence (15) sur le plancher de déplacement (5) à proximité du capteur optique (4).

17. Procédé selon la revendication 15, **caractérisé en ce que** la hauteur du véhicule (1) au-dessus du plancher de déplacement (5) est mesurée au moyen d'une unité de mesure d'écart (19), notamment une unité de télémétrie à laser ou à ultrasons, et l'écart entre les droites de projection de l'unité de projection (3) est calculé dans l'unité de traitement de données à partir de la hauteur mesurée en tant que trajet de référence.

18. Procédé selon la revendication 15, **caractérisé en ce que** le trajet de référence est calculé dans l'unité de traitement de données à partir d'informations de propulsion du véhicule (1).

19. Procédé selon l'une des revendications 1 à 18, **caractérisé en ce que** des points de repère (20, 21 ,22) artificiels disposés sur le plancher de déplacement (5) sont détectés par le capteur optique (4).

20. Véhicule (1) destiné à mettre en œuvre le procédé selon l'une des revendications 1 à 19, une unité de projection (3) configurée pour projeter un modèle de projection (7) sur le plancher de déplacement (5) et un capteur optique (4) configuré pour détecter le modèle de projection (7) étant disposés sur le véhicule (1), et une unité de traitement de données configurée pour l'interprétation des données de capteur étant présente sur le véhicule (1), **caractérisé en ce que** l'unité de traitement de données est conçue pour créer une image de rugosité du plancher de déplacement (5) à partir des modifications du modèle de projection (7) en raison des irrégularités du sol du plancher de déplacement (5), lequel rend possible une localisation du véhicule (1) sur le plancher de déplacement (5).

21. Véhicule (1) selon la revendication 20, **caractérisé en ce que** l'unité de projection (3) est réalisée sous la forme d'un projecteur à lumière laser.

22. Véhicule (1) selon la revendication 20 ou 21, **caractérisé en ce que** le capteur optique (4) est réalisé sous la forme d'une caméra.

23. Véhicule (1) selon l'une des revendications 20 à 22, **caractérisé en ce que** la direction du rayon de projection de l'unité de projection (3) est orientée selon un angle aigu vers le plancher de déplacement (5) et la direction de réception du capteur optique (3) est orientée orthogonalement au plancher de déplacement (5), l'unité de projection (3) et le capteur optique (4) étant espacés l'un de l'autre au point que la direction du rayon de projection et la direction de réception se rencontrent sur le plancher de déplacement (5).

24. Véhicule (1) selon l'une des revendications 20 à 23, **caractérisé en ce que** l'unité de projection (3) et le capteur optique (4) sont disposés décalés dans le sens longitudinal du véhicule.

25. Véhicule (1) selon l'une des revendications 20 à 24, **caractérisé en ce que** le véhicule (1) est réalisé sous la forme d'un chariot de manutention, notamment sous la forme d'un chariot à plateforme, d'un tracteur, d'un chariot tracteur, d'un gerbeur ou d'un véhicule de préparation de commandes.

26. Véhicule (1) selon l'une des revendications 20 à 25, **caractérisé en ce que** le véhicule (1) est réalisé sous la forme d'un véhicule autonome.

27. Véhicule (1) selon la revendication 26, **caractérisé en ce que** le véhicule (1) est réalisé sous la forme d'un robot de préparation de commandes mobile.
